Europäisches Patentamt

European Patent Office

Office européen des brevets

(11) Publication number: **0 111 022**
**B1**

(12)

# EUROPEAN PATENT SPECIFICATION

(45) Date of publication of patent specification: **05.04.89**

(51) Int. Cl.⁴: **B 29 D 9/00**

(21) Application number: **82111438.6**

(22) Date of filing: **10.12.82**

(54) **Method for making unitary molded silicone rubber product from two different silicone rubbers.**

(43) Date of publication of application:
**20.06.84 Bulletin 84/25**

(45) Publication of the grant of the patent:
**05.04.89 Bulletin 89/14**

(84) Designated Contracting States:
**DE FR GB NL**

(56) References cited:
**EP-A-0 005 455**
**DE-A-2 822 033**
**FR-A-2 223 442**
**GB-A-1 455 376**
**US-A-3 982 320**

**CHEMICAL ABSTRACTS, vol. 83, no. 6, 11th**
**August 1975, page 53, no. 44505m, Columbus,**
**Ohio, US; & JP - A - 75 02 080 (SHIN-ETSU**
**POLYMER CO., LTD.) 10-01-1975**

(73) Proprietor: **Toray Silicone Co., Ltd.**
**8 Nihonbashi-muromachi 2-chome**
**Chuo-ku Tokyo 103 (JP)**

(72) Inventor: **Kobayashi, Hideki**
**1-6 Yushudai Nishi**
**Ichihara-shi Chiba-ken (JP)**
Inventor: **Honma, Hiroshi**
**1-6 Yushudai Nishi**
**Ichihara-shi Chiba-ken (JP)**
Inventor: **Hamada, Mitsuo**
**3-5-17 Okubo**
**Kisurazu-shi Chiba-ken (JP)**

(74) Representative: **Spott, Gottfried, Dr. et al**
**Sendlinger-Tor-Platz 11**
**D-8000 München 2 (DE)**

## Description

This invention relates to a method for the manufacture of a silicone rubber molded product by uniting together a portion of silicone rubber containing 5 to 75 wt% carbon black and a portion of silicone rubber containing substantially no carbon black.

Silicone rubber molded products in which the cured body has a portion of silicone rubber containing carbon black and a portion of silicone rubber containing substantially no carbon black have been widely used as two-color keyboard pads, zebra-type connectors, and electrical joints for various types of electrical appliances.

An improved method for producing this type of silicon rubber molded product was disclosed in Japanese Patent Publication No. Sho 56[1981]-41417, published September 28, 1981, in the names of Sado et al. In this method, an organic peroxide is added to unvulcanized silicone rubber containing carbon black and a conductive silicone rubber cured body is formed by hot compression molding. Subsequently, an organic peroxide is also added to an insulating unvulcanized silicone rubber containing substantially no carbon black and molded along with the above-mentioned cured body by hot compression molding. As a result, a silicone rubber molded product is formed in which a portion of the conductive silicone rubber cured body containing carbon black and a portion of the silicon rubber cured body substantially containing no carbon black are united together.

However, because carbon black included in the conductive silicone rubber tends to cause vulcanization inhibition with the organic peroxide, the applicable organic peroxides are limited to dicumyl peroxide, di-t-butyl peroxide, and 2,5-dimethyl-2,5-di-(t-butylperoxy)hexane. When these organic peroxides which are less likely to be influenced by vulcanization inhibition with carbon black, are used, the following drawbacks occur. Although the mold temperature is set a high temperature (i.e. 150°C or higher, or 170°C or higher), molding must be continued for 3 to 4 minutes or 10 minutes or more, resulting in increased consumption of electrical power and poor production efficiency. The surface of silicone rubber results in curing inhibition due to the air trapped in the gap between the mold and silicone rubber. Moreover, because foaming occurs when hot air vulcanization is carried out, the method of vulcanization is limited.

Ehrreich and Reti in U.S. Patent No. 3,620,873, issued November 16 1971, describe making plastic members of electrically conductive or thermally conductive sheets or strips and nonconductive areas.

The inventors earnestly conducted the present study in an attempt to overcome the drawbacks of the conventionally known silicone rubber molded product and its manufacturing method. As a result, a curing mechanism which was different from that in the conventional methods was employed. This invention was achieved without the above-mentioned drawbacks.

This invention relates to a method for making a molded product comprising contacting tightly (A) an unvulcanized silicone rubber composition containing substantially no carbon black and which is curable by an addition reaction using a platinum catalyst with (B) a cured silicone rubber containing 5 to 75 weight percent carbon black and then heating to cure the unvulcanized composition forming a unitary body from (A) and (B).

The portion of the silicone rubber cured body containing 5 to 75 wt% of carbon black can be composed of various types of silicon rubbers including organic peroxide vulcanization type, addition reaction curing type, room temperature/moisture curing type, and other conventionally known curing types as long as it contains 5 to 75 wt% of carbon black. However, in the case of room temperature/moisture curing type, it may inhibit curing of the addition reaction curing type silicone rubber using a platinum catalyst if a certain type of curing acceleration catalyst is used. Thus, organic peroxide vulcanization type or addition reaction curing type silicone rubbers are preferable. In view of the facts that the curing temperature can be lowered and the curing time can be reduced, the addition reaction curing type silicone rubber using a platinum catalyst is more preferable.

The major components of the organic peroxide vulcanization type silicon rubber are polyorganosiloxane gums e.g. polydimethylsiloxane gum, dimethylsiloxane/methylvinylsiloxane copolymer gum, and dimethylsiloxane/methylphenylsiloxane/methylvinylsiloxane copolymer gum, carbon black, and organic peroxides e.g. benzoyl peroxide, 2,4-dichlorobenzoyl peroxide, 2,5-dimethyl-2,5-di(t-butyl peroxy)hexane, di-t-butyl peroxide, and dicumyl peroxide. In many cases, reinforcement fillers e.g. fumed silica, wet silica, and those fillers whose surfaces have been treated for hydrophobization can be included. If desirable, auxiliary materials such as bulk fillers, surface treatment agents for reinforcement fillers, conductive fibers, conductive metals or metal oxides, heat resisting agents, and dyes can be included.

The major components of the addition reaction curable silicone rubber are as follows: organopolysiloxanes which are available in liquid form or gum form at ambient temperature and which contain at least two alkenyl groups per molecule e.g. vinyl and allyl groups, examples of such organopolysiloxanes being dimethylpolysiloxane with dimethylvinylsilyl groups at both ends, dimethylsiloxane/methylvinylsiloxane copolymer with dimethylvinylsilyl groups at both ends, and dimethylsiloxane/methylphenylsiloxane/methylvinylsiloxane copolymer with dimethylvinylsilyl groups at both ends; organohydrogenpolysiloxanes which are available in liquid form e.g. methylhydrogenpolysiloxane with trimethylsilyl groups at both ends, dimethylsiloxane/methylhydrogensiloxane copolymer with trimethylsilyl groups at both ends and tetramethyltetrahydrogencyclotet-rasiloxane; carbon black and a platinum catalyst for the addition reaction e.g. platinum black, platinum sponge, platinum chloride (II), chloroplatinic acid, a reaction product between chloroplatinic acid and a monohydric alcohol, a complex between chloroplatinic acid and an olefin, a complex between chloroplatinic acid and vinylsiloxane, platinum bisacetylacetonate, palladium catalysts and rhodium catalysts. In many cases the aforementioned reinforcement fillers and addition reaction rate retardants e.g. organonitrogen compounds, alkyne compounds, and tin compounds may be included. If desirable, auxiliary materials such as bulk fillers, surface treatment agents for the reinforcement fillers, conductive fibers, conductive metals or metal oxides, heat resisting agents, and dyes may be included.

Carbon black is present in an amount of 5 to 75 weight percent in the silicone rubber. If it is less than 5 weight percent the united state between the portion of the silicone rubber cured body and the portion of the silicone rubber cured body containing substantially no carbon black which is curable in the addition reaction using a platinum catalyst is insufficient, namely, the bonding strength is insufficient or bonding is poor. If it exceeds 75 weight percent the blending workability and molding workability are impaired.

Examples of types of carbon black are channel black, furnace black, thermal black, and acetylene black. So as to improve the bonding strength between the aforementioned two types of cured bodies, a pH value based on item 5,5 in JIS K 6221 is preferably 3.0 or greater and more preferably pH 4.0 to 9.5. When the silicone rubber molded product of this invention is used for electrical joints, the above-mentioned carbon black is preferably selected from the conductive grade. The conductive grade is often found in furnace black and acetylene black. Preferably the carbon black is the conductive grade in an amount of from 10 to 50 weight percent.

The silicone rubber cured body containing 5 to 75 weight percent of carbon black is molded in the following manner. The aforementioned major components and if desirable, auxiliary materials are blended to homogeneity. In the case of organic peroxide vulcanization type silicone rubbers, it is molded by conventional compression molding or extrusion molding (hot air vulcanization) techniques. In the case of solid addition reaction curable silicone rubber using a platinum catalyst, molding is accomplished by compression molding or extrusion molding (hot air vulcanization). In the case of liquid or paste form silicone rubber, molding is accomplished by compression molding, injection molding transfer molding, or extrusion molding (hot air vulcanization). The vulcanization temperature and time are selected appropriately according to the types and amount so addition of vulcanization agents or curing catalysts as well as type of vulcanization or molding method. In the case of organic peroxide vulcanization type silicone rubbers, compression molding is generally carried out at 110°C to 200°C for more than 5 minutes and extrusion molding (not air vulcanization) is carried out at 300°C to 550°C for a few minutes to a few tenths of a second. In the case of the addition reaction curable type using a platinum catalyst, vulcanization or molding can be carried out at a low temperature for a short time in any of these molding methods compared to the case of the organic peroxide vulcanization type e.g. 1 minute at 100°C, 40 seconds at 120°C and 20 seconds at 150°C. Unlike the case involving the organic peroxide vulcanization type, the secondary vulcanization in a hot air oven is not necessary. Thus, it is advantageous in terms of energy conservation and greater productivity.

The configuration of the silicone rubber cured body containing 5 to 75 weight percent of carbon black is selected appropriately according to the usages of the silicone rubber molded product of this invention.

The silicone rubber cured body substantially containing no carbon black which is curable in the addition reaction using a platinum catalyst is literally formed at room temperature or by heat curing of a silicone rubber composition containing substantially no carbon black which is curable in the addition reaction using a platinum catalyst. In this case, both cured bodies are united when the silicone rubber composition is cured in a tightly contacted state with the previously molded silicone rubber cured body containing 50 to 75 weight percent of carbon black. As a result, the desired silicone rubber molded product is formed.

The silicone rubber containing substantially no carbon black which is curable in the addition reaction using a platinum catalyst contains only the platinum addition reaction catalysts unlike the addition reaction curable silicone rubber containing 5 to 75 weight percent of carbon black. In addition with the exclusion of the condition that carbon black be not substantially added, the silicone rubber consists of the same major components and auxiliary materials which are added in many cases or when desired. Both major components and auxiliary materials are the same as those mentioned in the case of addition reaction curable silicone rubbers for the formation of silicone rubber cured body containing 5 to 75 weight percent of carbon black. In terms of improvement in the bonding strength between two cured bodies, both organohydrogenpolysiloxane and organopolysiloxane are compounded preferably in such a proportion that the molar ratio of the Si-bonded hydrogen atoms in the organohydrogenpolysiloxane to the Si-bonded alkenyl groups in the organopolysiloxane containing at least two alkenyl groups per molecule ranges from 0.8/1 to 6/1.

The condition stating "containing substantially no carbon black" means that carbon black is not added at all or a very small amount such as 1 to 2 weight percent or less which is required for coloring or flame retardation may be added.

The types of molding methods used when the addition reaction curable silicone rubber using a platinum catalyst is in contact with the silicone rubber cured body containing 5 to 75 weight percent of carbon black are preferably compression molding, injection molding, and extrusion molding (hot air vulcanization) when the organopolysiloxane containing at least two alkenyl groups per molecule is supplied in the gum form. The preferable molding methods are compression molding, injection molding, transfer molding, and extrusion molding (hot air vulcanization) when the organopolysiloxane containing at least two alkyenyl groups per molecule is supplied in the liquid form. In terms of production efficiency, injection molding is preferable. In the molding system in which a silicone rubber is in contact with a mold as in compression molding, injection molding, and transfer molding, a sufficiently cured silicone rubber body can be obtained with the following curing temperature and time: 1 minute at 100°C, 40 seconds at 120°C, 20 seconds at 150°C, and 15 seconds at 170°C. In the case of hot air vulcanization, sufficient curing can be carried out with the following curing temperature and time: a few tenths of a second to a few seconds at 300—550°C. In this case, the silicone rubber cured body containing substantially no carbon black is strongly bonded to the silicone rubber cured body containing 5 to 75 weight percent of carbon black.

The silicone rubber molded product obtained according to the method of this invention in which a portion of the silicone rubber cured body containing 5 to 75 weight percent of carbon black and a portion of the silicone rubber cured body containing substantially no carbon black which is curable by the addition reaction using a platinum catalyst are united together, has the characteristic that both cured bodies are strongly bonded together and form a unitary body. When an addition reaction curing type silicone rubber is used as a silicone rubber for forming a portion of the silicone rubber cured body containing 5 to 75 weight percent of carbon black, both surface and interior are cured uniformly; thus, the curing of the silicone rubber surface is not inhibited by the air trapped in the gap between the mold and the silicone rubber and the hot air in the case of hot air vulcanization.

According to the method of this invention for producing a silicone rubber molded product, the silicone rubber molded product in which a portion of the silicon rubber cured body containing 5 to 75 weight percent of carbon black and a portion of the silicone rubber cured body containing substantially no carbon black which is curable by the addition reaction using a platinum catalyst are united together can be produced at a lower temperature in a shorter time compared to the conventional method using an organic peroxide. That is, the desired silicone rubber molded product can be produced with less electrical power consumption. In addition, not only compression molding but various molding methods such as injection molding, transfer molding, and extrusion molding can also be used efficiently.

The silicone rubber molded product obtained according to the method of this invention is useful for conductive rubber parts in various types of electrical and electronic appliances. In particular, it is useful for electrical joints.

This invention will be explained in detail in the following examples. "Parts" indicated in the examples means "parts by weight". The viscosity is the value measured at 25°C.

Example 1

A copolymer gum consisting of 99.8 mol% dimethylsiloxane units and 0.2 mol% methylvinylsiloxane units (100 parts) and Denka Black (conductive acetylene black by Denki Kagaka Kogyo K.K.) (50 parts or 20 parts) were blended homogeneously, and the dicumyl peroxide (1.5 parts) was added. Each of the mixtures were thoroughly blended and introduced into a mold. Compression molding was carried out at 150°C for 10 minutes under a pressure 9,8 N/mm². After leaving the product in a hot air circulation type oven at 250°C for 4 hours, a silicone rubber cured body containing 30.0 wt% of acetylene black was obtained and a silicone rubber cured body containing 16.6 wt% of acetylene black was obtained.

Subsequently, the above-mentioned copolymer gum (100 parts) and wet silica (40 parts) were blended homogeneously, and dimethylsiloxane/methylhydrogensiloxane copolymer with trimethylsilylgroups at both ends (0.4 parts, 50 mol% of dimethylsiloxane units, 50 mol% of methylhydrogensiloxane units, viscosity 5 mm²/s), an isopropanol solution of chloroplatinic acid (platinum content 0.34 wt%, 0.1 parts) and methylbutynol (0.02 parts) were added. The mixture was blended to homogeneity. This mixture was introduced into another mold along with the silicone rubber cured body containing 30 wt% or 16.6 wt% of acetylene black, and molded at 120°C for one minute under a pressure 9,8 N/mm² by compression molding. As a result, a silicone molded product was obtained in which a portion of the silicone rubber cured body containing 30.0 wt% of acetylene black and a portion of the silicon rubber cured body containing 28.2 wt% of wet silica which was curable in the addition reaction were united together, and another similar silicone molded product was obtained except a portion of the silicone rubber cured body contained 16.6 weight percent.

Both cured bodies were held with a jig in a tensile strength tester and the tensile strength was measured. Fracture occurred in the portion of the silicone rubber cured body containing 30 wt% or 16.6 wt% of acetylene black and no breaks were made in the boundary surface. The fracture tensile strengths were 5,39 N/mm² and 3,92 N/mm² respectively.

A silicone rubber consisting of the above-mentioned copolymer gum (100 parts, wet silica 50 parts) and dicumyl peroxide (1.5 parts) was molded under the same conditions as in the case of the silicone rubber containing acetylene black. The above-mentioned silicone rubber containing 28.6 wt% of wet silica, which was curable in the addition reaction was molded under the same conditions as mentioned above in contact with the above-mentioned cured body. Both cured bodies were not bonded at all; thus, a united molded product was not obtained.

Example 2

Dimethylpolysiloxane with dimethylvinylsilyl groups at both ends (average degree of polymerization 320, 100 parts) and Ketjenblack EC (conductive furnace black by Lion Akuzo K.K., 15 parts) were blended homogeneously, and dimethylsiloxane/methylhydrogensiloxane copolymer as used in Example 1 (1.8 parts), an isopropanol solution of chloroplatinic acid (platinum content 0.34 wt%, 1.0 parts) and methylbutynol (0.05 parts) were added. The mixture was blended to homogeneity and introduced into an injection molding machine in which the degassing treatment was carried out. Injection molding was carried out at 150°C for 20 seconds under an injection pressure of 3,92 N/mm². As a result, a silicone cured body containing 12.9 wt% of conductive furnace black was obtained.

Subsequently, a liquid silicone rubber was prepared by using the same composition as in the above-mentioned addition reaction curable silicone rubber containing a platinum catalyst except that fumed silica treated for hydrophobization (15 parts, specific surface area 130 m²/g) was added instead of Ketjenblack EC. The liquid silicone rubber prepared above was injected into an injection molding machine which the degassing treatment was carried out. The injection molding was carried out at 150°C for 20 seconds under an injection pressure of 3,92 N/mm² in a mold in which the above-mentioned silicone rubber cured body containing 12.9 wt% of conductive furnace black has been placed. As a result, a silicone rubber molded product was obtained in which the portion of the silicone rubber cured body containing 12.9 wt% of conductive furnace black and the portion of the silicone rubber cured body containing 12.9 wt% of fumed silica which has been treated for hydrophobization were united together. The surface of this molded product was very smooth and both surface and interior were cured homogeneously.

Both cured bodies were held with a jig in a tensile strength tester and the tensile strength was measured. Fracture occurred in the portion of the silicone rubber cured body containing 13 wt% of conductive furnace black, and no breaks were made in the boundary surface. The fracture tensile strength was 1,76 N/mm².

As a comparative example, molding was carried out in reversed order. The portion of the silicone rubber cured body containing 12.0 wt% of conductive furnace black was not bonded at all to the portion of the silicone rubber cured body containing 12.9 wt% of fumed silica which had been treated for hydrophobization; thus, a united molded product was not obtained.

Moreover, this above-mentioned silicone cured body containing 12.9 wt% of fumed silica which had been treated for hydrophobization was molded at first and placed in a mold in the injection molding machine. A liquid silicone rubber containing 12.9 wt% of fumed silica which has been treated for hydrophobization was injection molded in the same mold at 150°C for 20 seconds under an injection pressure of 3,92 N/mm². Both cured bodies were not bonded at all; thus, a united molded product was not obtained.

Example 3

The same copolymer gum as used in Example 1 (100 parts) and Denka Back (70 parts) were blended homogeneously. Subsequently, the same dimethylsiloxane/methylhydrogensiloxane copolymer (0.4 parts) and isopropanol solution of chloroplatinic acid (0.1 parts) as used in Example 1 were added, and the mixture was thoroughly blended and injected into a mold. Compression molding was carried out at 100°C for 2 minutes under a pressure of 9,8 N/mm². As a result, a silicone cured body containing 41.0 wt% of Denka Black was obtained. This cured body was injected into another mold along with the same addition reaction curable silicone rubber containing 28.6 wt% of wet silica as used in Example 1 and compression molded at 120°C for one minute under a pressure of 9,8 N/mm². As a result, a silicone rubber molded product was obtained in which the portion of the silicone rubber cured body containing 41.0 wt% of Denka Black and the portion of the silicone cured body containing 28.6 wt% of wet silica were united together.

Claim

A method for making a molded product comprising contacting tightly (A) an unvulcanized silicone rubber composition containing substantially no carbon black and which is curable by an addition reaction using a platinum catalyst with (B) a cured silicone rubber containing 5 to 75 weight percent carbon black and then heating to cure the unvulcanized composition forming a unitary body from (A) and (B).

Patentanspruch

Verfahren zur Herstellung eines einheitlichen Formkörpers, dadurch gekennzeichnet, daß (A) eine nicht vulkanisierte Siliconkautschukzusammensetzung, die praktisch keinen Ruß enthält und die durch Additionsreaktion unter Verwendung eines Platinkatalysators härtbar ist, innig mit (B) einem gehärteten Siliconkautschuk, der 5 bis 75 Gewichtsprozent Ruß enthält, in Kontakt gebracht wird und die nicht vulkanisierte Zusammensetzung dann zur Härtung erhitzt und so ein einheitlicher Formkörper aus den Komponenten (A) und (B) gebildet wird.

**Revendication**

Un procédé pour fabriquer un produit moulé, consistant à mettre étroitement en contact (A) une composition de caoutchouc de silicone non vulcanisée no contenant sensiblement pas de noir de carbone et qui est durcissable par une réaction d'addition à l'aide d'un catalyseur au platine, avec (b) un caoutchouc de silicone durci contenant 5 à 75 pour cent en poids de noir de carbone, puis à chauffer pour faire durcir la composition non vulcanisée en formant un corps unitaire à partir de (A) et (B).